Europäisches Patentamt

European Patent Office

Office européen des brevets

(11) Numéro de publication: **0 584 424 A1**

# DEMANDE DE BREVET EUROPEEN

(21) Numéro de dépôt: 92440099.7

(22) Date de dépôt: **28.08.92**

(51) Int. Cl.5: **B32B 5/20**, B32B 29/00, B65D 65/40

(43) Date de publication de la demande:
**02.03.94 Bulletin 94/09**

(84) Etats contractants désignés:
**AT BE CH DE DK ES FR GB GR IE IT LI LU MC NL PT SE**

(71) Demandeur: **COFRADEC S.A.**
**Chemin des Croix 6**
**F-59530 Le Ouesnoy(FR)**

(72) Inventeur: **Descamps, François**
**8, RUE MAURICE PIORETTE**
**F-59139 PONT-SUR-SAMBRE(FR)**

(74) Mandataire: **AMMANN INGENIEURS-CONSEILS**
**EN PROPRIETE INTELLECTUELLE SA BERNE**
**Schwarztorstrasse 31**
**CH-3001 Berne (CH)**

(54) **Feuille laminée rigidifiable.**

(57) La feuille laminée rigidifiable décrite est constituée d'au moins trois couches laminées superposées. La couche de fond (10) est en matière naturelle ou synthétique de préférence de qualité alimentaire. La couche médiane (16) est une couche d'impression en countinu ou en tramé consistant en une encre gonflable sous l'effet de la chaleur. La couche de couverture (18) est en matière naturelle ou synthétique. Les deux couches extérieures mentionnées peuvent contenir une proportion élevée en masse de papier. Le tout est très facilement recyclable.

EP 0 584 424 A1

La présente invention concerne une feuille laminée rigidifiable, un procédé pour sa fabrication, et une utilisation de cette feuille, à savoir sa transformation en emballage.

Au cours de la dernière décennie, le public ainsi que l'industrie ont été sensibilisés pour la réutilisation de matières premières transformés en produits manufacturés, dû à la rareté croissante des matières premières et de l'énergie ou de leur coût croissant. Le recyclage de matériaux est devenu à présent une nécessité, et l'écologie appliquée est une branche importante de l'industrie et de l'économie modernes.

Tandis que le recyclage de certains matériaux comme le verre, l'aluminium, le fer, le fer-blanc, le papier à journaux, etc., ne pose pas de problèmes majeures de recupération et de retraitement, il n'en est pas de même avec la plupart des matériaux d'emballage. L'utilisateur est accoutumé à acheter la marchandise dans des emballages en matière plastique ayant un aspect brillant et joli, et la rigidité de certains emballages est de rigueur.

Cette rigidité est normalement obtenue en choisissant des matériaux ayant une solidité correspondante, à savoir du carton moyen à fort, du carton ondulé, etc. Chacun sait que ces matériaux sont difficiles à travailler lors de leur fabrication et leur confectionnement en emballages. Le carton ondulé est en plus difficile à enrouler en bobines car les enroulements qui se suivent ont tendance à glisser l'un sur l'autre.

Le but de l'invention est de créer une nouvelle feuille laminée rigidifiable, notamment utilisable pour confectionner des emballages, qui répond aux critères exposés ci-dessus et qui est recyclable dans sa totalité et sans complications.

La nouvelle feuille laminée rigidifiable selon l'invention remplit le but mentionné; elle est définie dans la première revendication indépendante. L'invention a aussi pour but un nouveau procédé pour la fabrication de la feuille laminée rigidifiable selon l'invention et une utilisation particulière de la feuille. Ce procéde et cette utilisation font l'objet de la seconde et la troisième revendication indépendantes, respectivement. Des exécutions particulières des trois objets de l'invention sont définies dans des revendications dépendantes.

L'invention se fonde sur l'idée créatrice que la rigidité de la feuille laminée selon l'invention n'est créée que lors de l'utilisation de celle-ci, à savoir après essentiellement toutes étapes de façonnage, de confectionnement etc. Ceci veut dire qu'on produit et travaille une matière souple et relativement mince, ce qui est facile et peut être effectue sur des machines de construction légère, tandis que la rigidification de la feuille laminée est opérée comme dernière étape, normalement après ou juste avant l'étape de remplissage d'un emballage fabriqué à partir de la feuille laminée rigidifiable selon l'invention ou toute autre utilisation de la feuille.

En plus, on a pris soin d'utiliser dans la feuille laminée selon l'invention, exclusivement des matériaux qui sont faciles à recycler sur les installations de recyclage disponibles actuellement.

La feuille laminée rigidifiable selon l'invention comprend trois constituants essentiels: Une couche de matière destinée à venir en contact avec la marchandise à emballer, une couche intérieure expansible et rigidifiable, et une couche de couverture. La feuille expansée peut être comparée à un sandwich, avec ses deux couches extérieures et une structure rigidifiée à l'intérieur.

De manière préférée, la couche supérieure de couverture porte une impression à choisir à volonté, pour désigner le contenu de l'emballage, pour servir de publicité, pour indiquer un mode d'emploi, des recettes ou toute autre information nécessaire ou désirée. Cette impression peut être recouverte à son tour par une couche de protection, par exemple un vernis durcissant sous l'influence de rayons énergétiques comme l'ultraviolet (UV). Des détails sont donnés ci-dessus.

Les deux couches extérieures de la feuille laminée rigidifiable selon l'invention sont de préférence en papier. On peut utiliser du papier partiellement ou totalement recyclé. Le matériau de la couche extérieure inférieure qui est destinée à venir en contact avec la marchandise à emballer est choisie parmi les matériaux acceptés pour alimentation lorsque l'emballage est destiné aux produits comestibles. Cette couche inférieure en papier peut être revêtue ou laminée d'un film de protection, connu en soi. De préférence, la couche inférieure est du papier recycle type "alimentaire" contenant de 20 à 50 % en poids de masse de papier recyclée.

La couche supérieure est typiquement en papier recyclé aussi; puisque cette couche ne viendra pas en contact avec des denrées alimentaires, elle peut être en papier recyclé à 100 %. Cette couche porte l'impression désirée, et elle sera de préférence recouverte d'un vernis transparent séchant à l'UV. Ces vernis sont connus de l'homme du métier et n'ont pas besoin d'être décrits en détail ici.

La couche médiane, à savoir intérieure, est le constituant le plus important de la feuille laminée rigidifiable. Elle doir former la squelette rigide de tout l'ensemble laminée.

Les encres gonflables ou gonflantes (expansibles) sont déjà connues. Ce sont des encres d'imprimerie qui forment par gonflage des reliefs aux endroits précis et désirés où l'encre avait été déposée, sous l'influence de la chaleur ou des rayons énergétiques aptes à chauffer l'impression. L'encre gonfle alors de façon permanente aux endroits imprimés en produisant le relief désuiré, L'application principale est la fabrications de papiers peints en relief.

Les encres gonflantes sont formulées et dessinées en fonction de leur utilisation normale, à savoir d'être expansées immédiatement après l'impression et lors du séchage pour produire un dessin surélevé. Pour pouvoir les utiliser dans le cadre de la présente invention, où le gonflage sera effectué non pas immédiatement mais après un laps de temps plus ou moins prolongé qui peut s'étendre sur plusieurs semaines, voire mois, il faut les modifier. En plus, les encres imprimées doivent résister aux actions mécaniques lors de l'enroulement, le transport, le déroulement et le confectionnement en emballages. Finalement, le gonflage ne dois pas avoir lieu lors du séchage de l'impression mais plus tard, c'est-à-dire la température d'activation, donc de l'expansion, doit être suffisamment élevée.

Les encres expansibles connues contiennent en général les composants suivants:

(A) un liant choisi parmi les dispersions, émulsions et solutions aqueuses de résines synthétiques, ayant en particulier
- une température de formation de film comprise entre 0° et 50 °C; et
- une limite de dilatation comprise entre 150 et 400 %; et

(B) un agent gonflant constitué par des microperles dont l'enveloppe est en matière thermoplastique et qui contiennent une substance thermo-expansible encapsulée, par exemple un hydrocarbure ou un autre liquide que se transforme par la chaleur en phase gazeuse. Ces microperles ont typiquement un diamètre compris entre 10 et 20 micromètre et sont par exemple décrites dans le brevet USA no. 3'615'972.

L'encre se compose de 50 à 95 % de liant et de 5 à 50 % d'agent gonflant. Pour les besoins de l'invention, on utilisera une encre spécialement formulée dont le pouvoir gonflant est de longue durée et qui ne gonfle pas en-dessous de 100 à 120 °C environ. Ceci permettra le stockage de la feuille laminée rigidifiable pendant plusieurs semaines, d'une part, et le séchage à température normale de séchage de l'impression faite avec l'encre sans qu'il y ait gonflement prématuré. Pour remplir la première condition, on choisit comme liant un polymère souple, resistant à la lumière, qui garde la souplesse pendant longtemps mais qui durcit pour donner une structure rigide sous l'influence de la chaleur.

Une formule type de l'encre gonflante selon l'invention est la suivante:

| Composant | proportion, parties en poids |
|---|---|
| Liant: Copolymère éthylène-acétate de vinyle en dispersion aqueuse (VINNAPAS EP 400) | 610 – 700 |
| Agent gonflant: EXPANCEL 642W4 | 160 – 260 |
| Agent auxiliaires: | |
| Craie précipitée (SOCAL P2) | 50 – 100 |
| Oxyde de titane (TIPURE R931) | 20 – 50 |
| Antimousse (BALAB 748) | 5 |
| Silicone (TEGO AB 500) | 5 |

L'encre gonflante sera appliquée sur toute la surface de la feuille inférieure par une méthode d'impression permettant d'obtenir la force de dépôt désirée. Cette force, exprimée en grammes par mètre carré de matière sèche, sera choisie en fonction de l'épaisseur de la feuille laminée après rigidification, et elle déterminera la méthode d'impression telle que flexogravure, sérigraphie, héliogravure, lithographie, etc. Il convient d'ajouter que l'expression "toute la surface" comprendra aussi une couverture complète de la surface par impression tramée.

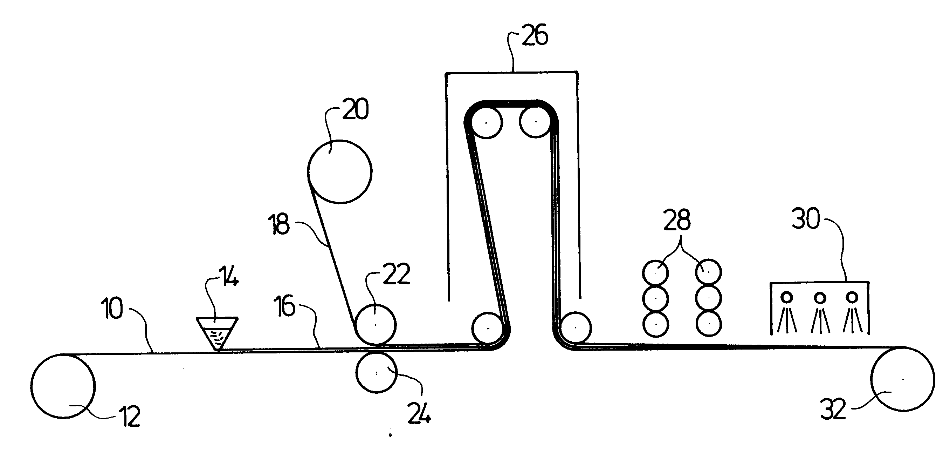

On décrira dans ce qui suit une exécution du procédé pour la fabrication de la feuille laminée rigidifiable selon l'invention, à l'aide du dessin schématique annexé et à titre d'exemple.

Le papier 10 donnant la couche inférieure de la feuille laminée est déroulé d'une bobine 12 et avance selon un plan essentiellement horizontal. Un appareil d'impression 14 dépose une couche d'encre gonflante 16 sur la bande de papier 10. Cette encre peut contenir des substances collancollantes pour assurer une bonne adhérence au papier 10 mais ce n'est pas nécessaire normalement. Ensuite, une bande de papier 18 est amenée depuis le haut, provenant d'une bobine 20, sur la couche d'encre déposée dans la station 14. Les trois couches 10, 16 et 18 sont réunies dans le laminoir 22, 24. Ensuite, la feuille laminée est passée par un séchoir 26 où l'encre contenue comme couche médiane de la feuille laminée est séchée à des températures évitant un gonflage prématuré.

La feuille laminée est ensuite imprimée en surface selon le dessin et la configuration désirés, adaptés à l'emballage à produire plus tard, dans la station d'impression 28. Une couche de protection en vernis UV sera également appliquée. L'impression ainsi produite est séchée par des lampes à ultraviolet 30, et la feuille laminée rigidifiable ainsi produite est enroulée sur une bobine 32.

Il est également possible d'utiliser un papier 18 déjà imprimé auparavant, et l'application finale du vernis UV n'est pas absolument nécessaire.

Les bobines 32 sont alors transportées chez l'utilisateur où la feuille laminée rigidifiable est transformée en emballages, par exemple des briques ou berlingots. Après remplisage et fermeture, les emballages sont soumis à un échauffement au moins superficiel, mais de préférence dans un four, ce qui fait gonfler la couche médiane de l'emballage, et après gonflage et refroidissement, l'emballage, au départ très souple, est devenu bien rigide comme du carton. Si l'emballage ne peut être chauffé avec le contenu, il est sans autre possible de le chauffer avant remplissage.

Le matériau de la feuille laminée rigidifiée est facile à recycler. Les deux couches extérieures sont en papier qui se séparent facilement dans un bain aqueux de la structure médiane rigide qui est en matière plastique, recyclable également. On obtient donc deux masses distictes seulement, facilement à séparer et à recycler séparément.

L'invention peut être modifiée dans le cadre de ce qui est revendiqué. Par exemple, on peut prévoir une ou les deux couches extérieures de la feuille laminée rigidifiable en matière synthétique également. En choisissant la matière de ces couches de façon appropriée, on peut sauvegarder la faculté au recyclage et même l'améliorer en ce qu'une seule matière sera recupérée. Il est également possible de modifier le procédé de fabrication, par exemple en appliquant la couche d'encre gonflante sur la bande de papier servant de couche supérieure et de laminer dans l'étape finale avec la bande de papier servant de couche inférieure.

## Revendications

1. Feuille laminée rigidifiable, caractérisée en ce qu'elle est constituée d'au moins trois couches laminées superposées, à savoir deux couches extérieures en matière naturelle ou synthétique, et une couche intérieure en encre gonflable sous l'effet de la chaleur, formant une structure souple qui est transformée par chauffage en un ensemble expansé et rigidifié réunissant les deux couches extérieures en une structure composite rigide.

2. Feuille selon la revendication 1, caractérisée en ce que les deux couches extérieures sont en papier contenant une proportion de masse de papier recyclée.

3. Feuille selon la revendication 2, caractérisée en ce que la couche inférieure contient de 20 à 50 % en poids de papier recyclé et est de qualité dite alimentaire, et que la couche supérieure contient jusqu'a 100 % en poids de masse de papier recyclée.

4. Feuille selon une au moins des revendications précédentes, caractérisée en ce que la couche supérieure est imprimée en fonction de l'utilisation ultérieure comme emballage.

5. Feuille selon une au moins des revendications précédentes, caractérisée en ce que la couche supérieure est enduite d'un vernis séchant à l'ultraviolet, comme revêtement de protection.

6. Feuille selon une au moins des revendications précédentes, caractérisée en ce que l'encre gonflable est une encre dont le point de commencement de gonflage se situe au-dessus de 100 °C environ.

**7.** Feuille selon la revendication 6, caractérisée en ce que l'encre gonflable est une encre dont le point de commencement de gonflage se situe au-dessus de 120 °C environ.

**8.** Procédé pour la fabrication de la feuille laminée rigidifiable selon une au moins des revendications précédentes, caractérisé en ce qu'une première bande de papier est imprimée sur toute sa surface avec une encre gonflable et rigidifiable sous l'effet de la chaleur, qu'une seconde bande de papier est laminée sur la couche de l'encre gonflable appliquée, et que le laminat ainsi obtenu est séché.

**9.** Procédé selon la revendication 8, caractérisé en ce que la première bande de papier est imprimée d'une encre ordinaire sur la surface libre après ou avant la lamination.

**10.** Procédé selon la revendication 8 ou 9, caractérisé en ce que la première bande de papier est enduite d'un vernis séchant à l'ultraviolet.

**11.** Procédé de fabrication d'un emballage rigidifié à partir de la feuille laminée rigidifiable selon l'une au moins des revendications 1 à 7, caractérisé en ce que la feuille laminée rigidifiable est transformée en emballage, et que l'emballage est porté au moins en surface à une température élevée ayant pour effet de rigidifier l'emballage par expansion et rigidification de la couche intermédiaire en encre gonflable.

**12.** Procédé selon la revendication 11, caractérisé en ce que la température élevée se situe au-dessus de 100 à 120 °C.

**13.** Procédé selon la revendication 11 ou 12, caractérisé en ce que l'emballage est rempli et ferme avant être porté à la température élevée.

**14.** Procédé selon l'une au moins des revendications 11 à 13, caractérisé en ce que l'emballage est chauffé dans un four.

Office européen
des brevets

**RAPPORT DE RECHERCHE EUROPEENNE**

Numero de la demande

EP    92 44 0099

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| E | WORLD PATENTS INDEX LATEST Accession No. 93-038669 Week 05 Derwent Publications Ltd., London GB & EP-A-526396 (FERCHIM ENG. SA) 03-02-93 * abstract * | 1,8,11 | B32B5/20 B32B29/00 B65D65/40 |
| X | GB-A-1 290 796 (J. HALSTEAD LTD) * le document en entier * | 1,8 | |
| Y | | 11,13 | |
| A | | 2-7,9,10 | |
| X | WO-A-8 604 100 (DECKER VERTRIEBSGESELLSCHAFT MBH) * revendications 5-7; figures 1-3; exemples 1,2 * | 1,6-8 | |
| Y | | 12 | |
| Y | FR-A-1 528 760 (J. DURAND) * le document en entier * | 11-13 | |
| A | | 14 | |
| A | GB-A-1 348 552 (THE DOW CHEMICAL CO.) * le document en entier * | 1,8,11 | DOMAINES TECHNIQUES RECHERCHES (Int. Cl.5 ) |
| A | BE-A-841 090 (SOCIETE ANONYME FINPAC) * le document en entier * | 1,8 | B32B B65D |

Le présent rapport a été établi pour toutes les revendications

| Lieu de la recherche | Date d'achèvement de la recherche | Examinateur |
|---|---|---|
| LA HAYE | 23 AVRIL 1993 | IBARROLA TORRES O. |